(19) Europäisches Patentamt
European Patent Office
Office européen des brevets

(11) **EP 4 694 012 A1**

(12) **EUROPEAN PATENT APPLICATION**
published in accordance with Art. 153(4) EPC

(43) Date of publication:
**11.02.2026  Bulletin 2026/07**

(21) Application number: 24785378.1

(22) Date of filing: **08.04.2024**

(51) International Patent Classification (IPC):
*H04L 5/00* (2006.01)      *H04W 72/0457* (2023.01)
*H04W 72/11* (2023.01)      *H04W 24/10* (2009.01)
*H04W 64/00* (2009.01)

(52) Cooperative Patent Classification (CPC):
**H04L 5/00; H04W 24/10; H04W 64/00;
H04W 72/0457; H04W 72/11**

(86) International application number:
**PCT/KR2024/004664**

(87) International publication number:
**WO 2024/210688 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023  KR 20230045684
27.09.2023  KR 20230130528**

(71) Applicant: **LG Electronics Inc.**
**Yeongdeungpo-gu
Seoul 07336 (KR)**

(72) Inventors:
• **CHOI, Minwoo**
  **Seoul 06772 (KR)**
• **HWANG, Seunggye**
  **Seoul 06772 (KR)**
• **YANG, Suckchel**
  **Seoul 06772 (KR)**
• **GO, Seongwon**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND APPARATUS FOR TRANSMITTING AND RECEIVING WIRELESS SIGNALS IN WIRELESS COMMUNICATION SYSTEM**

(57)     A method by which a terminal transmits a sounding reference signal (SRS) for positioning in a wireless communication system, and an apparatus therefor, according to various embodiments, are disclosed. Disclosed are the method and the apparatus, the method comprising the steps of: receiving configuration information including an SRS frequency hopping configuration through upper layer signaling; receiving first control information for activating one SRS resource set from among a plurality of SRS resource sets; and transmitting the SRS for the positioning in the one SRS resource set.

FIG. 17

receive control information including SRS frequency hopping configuration through higher layer signaling — S171

receive first control information activating one of a plurality of SRS resource sets — S173

determine whether to activate SRS frequency hopping configuration based on first control information — S175

transmit SRS for positioning in the one SRS resource set — S177

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the disclosure is to provide a method and device for transmitting or receiving signals more accurately and efficiently in a wireless communication system.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

According to an aspect, a method for transmitting a sounding reference signal (SRS) for positioning by a user equipment (UE) in a wireless communication system may include receiving configuration information including an SRS frequency hopping configuration through higher layer signaling, receiving first control information activating one of a plurality of SRS resource sets, and transmitting the SRS for positioning in the one SRS resource set. It may be determined whether to activate the SRS frequency hopping configuration based on the first control information activating the one SRS resource set.

Alternatively, based on an SRS resource set identifier (ID) of the one SRS resource set included in the first control information being an ID that supports SRS frequency hopping, the SRS frequency hopping configuration may be activated.

Alternatively, the SRS for positioning may be transmitted based on the SRS frequency hopping configuration corresponding to the SRS resource set ID.

Alternatively, based on an SRS resource set ID of the one SRS resource set included in the first control information being an ID that does not support SRS frequency hopping, the SRS frequency hopping configuration may not be activated.

Alternatively, the method may further include receiving second control information activating another SRS resource set ID that does not support SRS frequency hopping, and based on the reception of the second control information, the SRS frequency hopping configuration may be changed from an activated state to a deactivated state.

Alternatively, the configuration information may include a different SRS frequency hopping configuration for each SRS resource set ID that supports frequency hopping.

Alternatively, the SRS frequency hopping configuration may include information about the number of hops, the number of symbols in the hops, a bandwidth of the hops, and the number of overlapping resource blocks between hops.

Alternatively, the first control information may be received through a medium access control (MAC) control element (CE).

Alternatively, the UE may be a reduced capability (RedCap) UE with a maximum transmission bandwidth size limited to 20MHz.

According to another aspect, a computer-readable recording medium having a program recorded thereon for performing the above method for transmitting an SRS for positioning may be provided.

According to another aspect, a UE that performs the above method for transmitting an SRS for positioning may be provided.

According to another aspect, a processing device for controlling a UE that performs the above method for transmitting an SRS for positioning may be provided.

According to another aspect, a method for receiving an SRS for positioning by a BS in a wireless communication system may include transmitting configuration information including an SRS frequency hopping configuration to a UE through higher layer signaling, transmitting first control information activating one of a plurality of SRS resource sets to the UE, and receiving the SRS for positioning in the one SRS resource set. It may be determined whether to activate the SRS frequency hopping configuration based on the first control information activating the one SRS resource set.

According to another aspect, a BS that performs the above method for receiving an SRS for positioning may be provided.

**ADVANTAGEOUS EFFECTS**

According to an embodiment of the present disclosure, a signal can be more accurately and efficiently transmitted or received in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

**BRIEF DESCRIPTION OF THE DRAWINGS**

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure for operating a network node (e.g., an upper node of a user equipment (UE), location management function (LMF), etc.) according to an embodiment.

FIG. 11 illustrates a UE operation procedure for performing positioning measurement.

FIG. 12 illustrates various integrated sensing and communication (ISAC) environments.

FIGS. 13 and 14 are diagrams illustrating methods for configuring frequency hopping for an SRSp.

FIGS. 15 and 16 are diagrams illustrating a method for transmitting an SRSp based on configuration information for the SRSp by a UE.

FIG. 17 is a diagram illustrating a method for transmitting an SRS for positioning by a UE.

FIG. 18 is a diagram illustrating a method for receiving an SRS for positioning by a BS.

FIGS. 19 to 22 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

As used herein, the term "base station" may be replaced with terms such as fixed station, Node B, gNode B (gNB), access point (AP), cell, transmission and reception point (TRP), etc. The term "relay" may be replaced with terms such as relay node (RN), relay station, etc. The term "terminal" may be replaced with terms such as user equipment (UE), mobile station (MS), mobile subscriber station (MSS), subscriber station (SS), etc.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System

- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point
- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

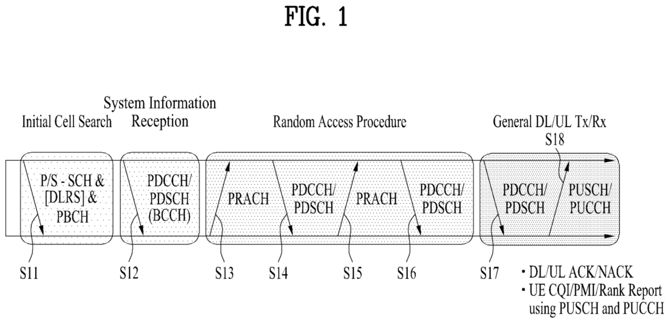

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

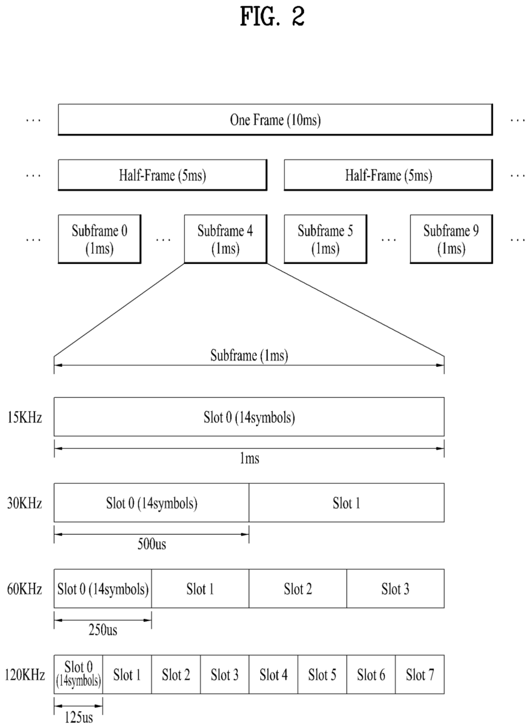

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

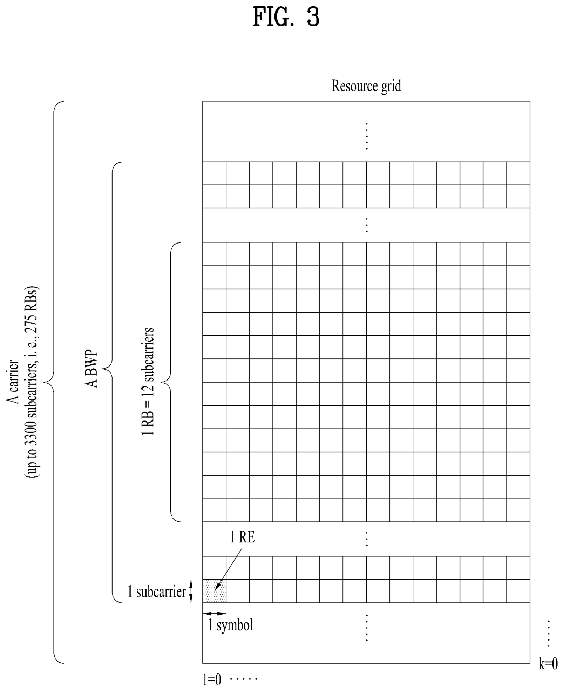

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

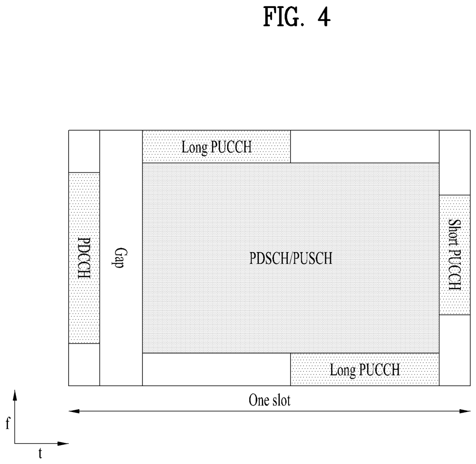

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

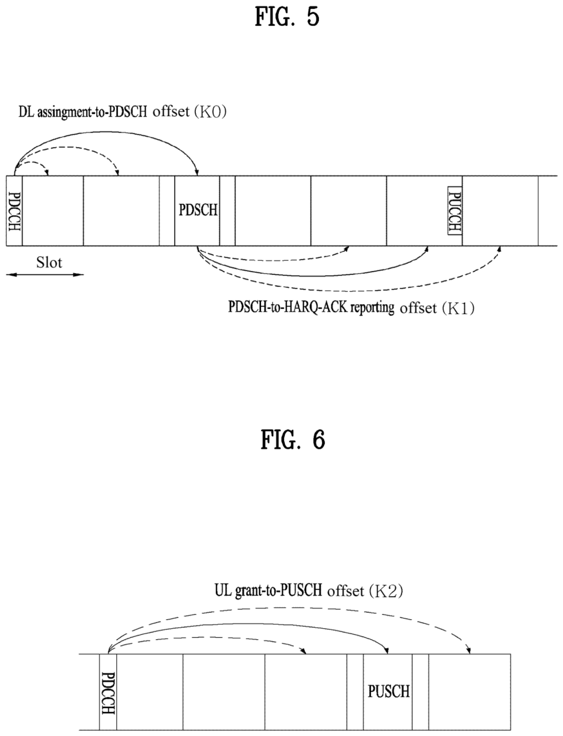

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include an HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## SRS (sounding reference signal)

The SRS is a UL reference signal transmitted by a UE and received by a BS. Based on the SRS, the BS may perform operations such as link adaptation, DL channel estimation based on channel reciprocity, UL beam management, UL precoding, and/or UL measurement acquisition.

The UE may receive SRS configuration information (e.g., TS38.331 SRS-Config IE) provided by the BS and determine parameters for SRS transmission based thereon. The configuration of the SRS is composed of a list of SRS-Resources, SRS-PosResources, SRS-ResourceSets, and SRS-PosResourcesets, where the SRS-ResourceSets and SRS-PosResourcesets each include sets of SRS-Resources and SRS-PosResources, respectively.

SRSs may be classified into three resource types according to the configuration of the time resources and transmission method.

When the resource type is set as periodic, the UE determines the position where the SRS resource configured through RRC is transmitted based on the configured period and offset, and periodically transmits, when configured, the SRS without separate signaling.

When the resource type is set as semi-persistent, the UE determines the position where the SRS resource configured through RRC is transmitted based on the configured period and offset. Then, when transmission of the SRS is activated by MAC CE, the UE starts periodic transmission of the indicated SRS. When the transmission is deactivated by MAC CE, the UE stops transmitting the SRS.

When the resource type is set as aperiodic, the UE transmits the indicated SRS in consideration of the position of the offset configured through RRC with respect to the reception timing of the DCI indicating triggering of the corresponding SRS resource set.

**Positioning**

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

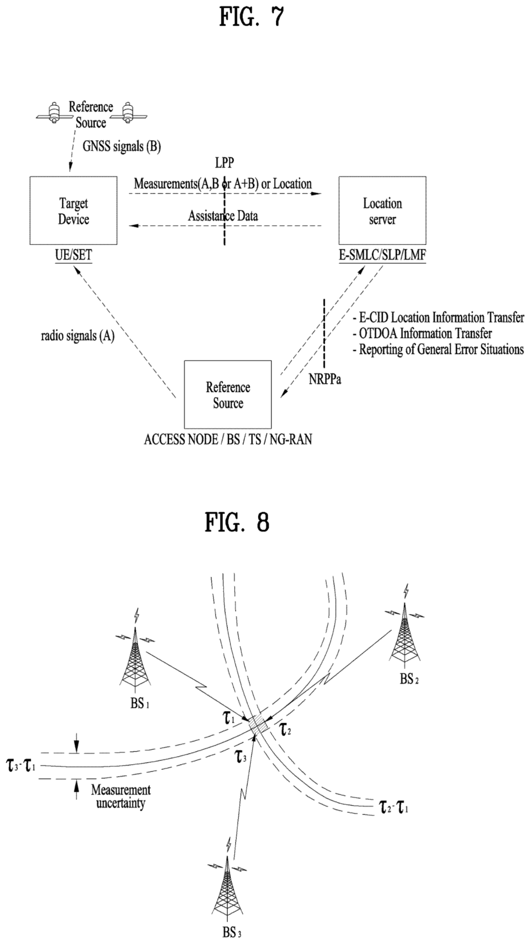

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i-T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth, and frequency/group/sequence hopping.

Multi RTT (round trip time)

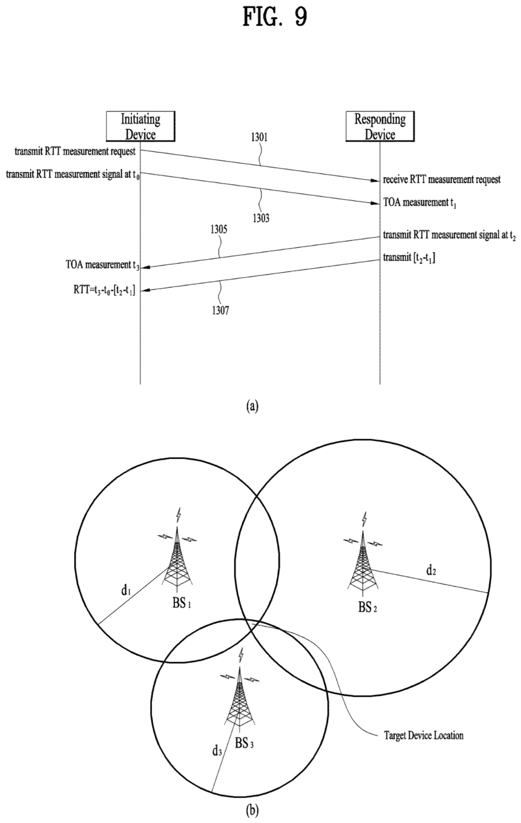

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at t0 and the responding device may acquire a ToA measurement t1(1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

$$[\text{Equation 2}]$$
$$\text{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. d1, d2, and d3 may be determined based on the measured RTT, and the location of a target device may be determined to be the intersection of the circumferences of circles with radiuses of d1, d2, and d3, in which BS1, BS2, and BS3 (or TRPs) are centered, respectively.

NG-RAN Positioning Architecture and Procedures

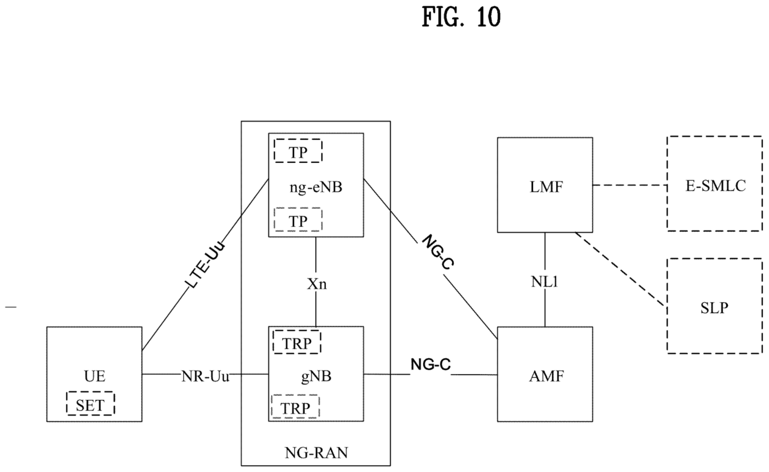

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE) or may decide to initiate the location services itself on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. When the location services are requested by other entities (e.g., GMLC or UE), the AMF transmits the location service results to the other entities.

An NG-RAN node may control TRPs/TPs such as RRM or DL-PRS only TPs to support a PRS-based terrestrial beacon system (TBS).

The LMF may be connected to an enhanced serving mobile location centre (E-SMLC) to access universal terrestrial radio access network (UTRAN) information.

The LMF can be connected to a secure user plane location (SUPL) location platform (SLP), which is responsible for positioning relative to the user plane.

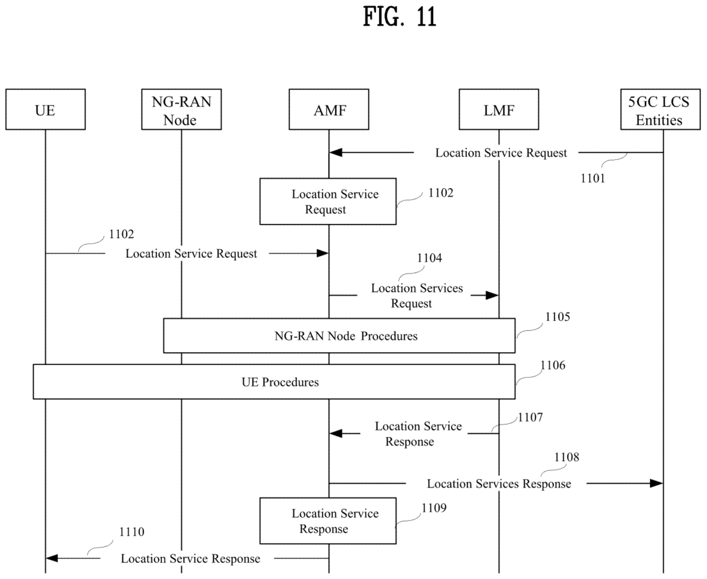

FIG. 11 illustrates an example of location services supported in a NG-RAN.

When a UE is in a connection management idle (CM-IDLE) state, if an AMF receives a location service request, the AMF performs a network trigger service request to configure signaling for a connection to the UE and allocation of a specific serving gNB/ng-eNB. In FIG. 11, it is assumed that the UE is in the connected mode.

Location service requests for the UE may be triggered, and the requests for the UE may be one of steps 1101, 1102, and 1103. For example, an entity in a 5GC such as a GMLC may request location services (e.g., positioning) for a target UE from a serving AMF (1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNBs (1105).

(Instead of or additionally to step 1105) The LMF initiates the positioning procedure with the UE to obtain location estimates or positioning measurements or transmit location assistance data to the UE (1106).

The LMF provides a location service response to the AMF (1107) (e.g., success or failure and location estimates for the UE if obtained).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

## SRS (Sounding Reference Signal) for Positioning

In Rel. 15 NR systems, periodic, aperiodic, and semi-persistent Rel. 15 SRSs may be transmitted for UL relative time of arrival (UL RTOA), UL SRS-RSRP, and UL-AOA measurements at the BS, thereby supporting UL TDOA and UL AOA.

In Rel. 16/17 NR systems, periodic, aperiodic, and semi-persistent SRSs for positioning may be transmitted for UL RTOA, UL SRS-RSRP, UL-AOA, and gNB Rx-Tx time difference measurements at the BS, thereby supporting for UL TDOA, UL AOA, and multi-RTT.

Depending on the purpose of use of the SRS, RRC parameters are configured differently. For example, for an SRS for positioning, the configuration is indicated by SRS-PosResources and SRS-PosResourceSet. For SRSs used for other purposes (e.g., Rel.15 SRS), the configuration is indicated by SRS-Resources and SRS-ResourceSet.

Hereinafter, to avoid confusion between the SRS for positioning and the SRS for other purposes, the SRS for positioning is referred to as SRSp, and the SRS used for other purposes (e.g., beam management) is referred to as SRS-m. In the new proposals of the present disclosure discussed below, the SRS may be interpreted as SRSp, unless stated otherwise.

The method of mapping SRS resources in the time/frequency domain on a resource grid (e.g., FIG. 3) is defined in the standards documents. For SRS-m, repetition within a slot may be configured, and intra-slot frequency hopping based thereon is supported. However, for SRSp, repetition within a slot cannot be configured according to the current NR standard (Rel-17), and intra-slot frequency hopping is not supported. For a periodic/semi-persistent SRS-m, inter-slot frequency hopping is supported in a periodic manner.

The SRSp configuration may be provided based on the serving cell (or camp-on cell) of the UE, and the SRS-p transmitted by the UE based on the SRSp configuration may be received by one or more cells (or TRPs), including the serving cell.

As an example, the SRSp may be configured through the RRC parameters SRS-PosResourceSet and SRS-PosResource defined in the TS 38.331 standard. Specifically, when a higher layer parameter SRS-PosResource is configured for the SRS (i.e., SRSp), and a higher layer parameter SpatialRelationInfoPos is configured, the ID of the configuration field for the reference RS is provided. The reference RS may be an SRS configured by the higher layer parameter SRS-Resource or SRS-PosResource, CSI-RS, SS/PBCH block, DL PRS of the serving cell, or DL PRS configured in the SS/PBCH block.

The UE is not expected to transmit multiple SRS resources with different spatial relationships on the same OFDM symbol.

If the higher layer parameter SpatialRelationInfoPos is not configured, the UE may use either a fixed spatial domain transmission filter or a different spatial domain transmission filter to transmit the SRSp configured by the higher layer parameter SRS-PosResource across multiple SRS resources.

In the RRC_CONNECTED mode, the UE transmits the SRSp configured by the higher layer parameter SRS-PosResource within an active UL BWP.

Only one RS source is provided for the higher layer parameter SpatialRelationInfoPos provided for each SRSp resource.

In the case of operation on the same carrier, if the SRSp conflicts with a scheduled PUSCH, the SRSp is dropped on symbols where the collision occurs.

The UE does not expect that SRSPosResource will be configured on the carrier of the serving cell with a slot format consisting of DL/UL symbols that are not configured for PUSCH/PUCCH transmission.

Depending on UE capabilities, SRSp resources associated with an initial UL BWP may be configured, and the SRSp resources are transmitted within the initial UL BWP in the RRC_INACTIVE mode with the same CP and SCS as configured for the initial UL BWP. Depending on UE capabilities, SRSp resources for positioning may be configured outside the initial BWP in the RRC_INACTIVE mode, and a frequency location, bandwidth, SCS, and CP length may be configured for SRSp transmission. The SRSp resources configured outside the initial BWP in the RRC_INACTIVE mode are configured in the same bandwidth and CC as the initial UL BWP.

## ISAC (Integrated Sensing and Communication)

Various methods for using wireless sensing are being widely discussed in recent wireless communication systems. In general, the conventional radar technology may be considered for the purpose of wireless sensing. However, there may be constraints associated with radar technology for sensing, as it is specialized for sensing and may not consider the characteristics of communication. Additionally, separate devices may be required for transmitting and receiving nodes to transmit and receive signals for wireless sensing. To address these issues, methods for using wireless sensing in wireless communication systems that support cellular networks, such as 5G and/or next-generation 6G, are actively being researched. For example, these methods include integrated sensing and communication (ISAC) or joint communication and sensing (JCAS).

In 3GPP standardization, studies for supporting ISAC in 5G/6G have been initiated. According to TR 22.837 published by 3GPP SA1 WG, wireless sensing is defined as a technology that uses radio waves to measure a distance, angle, or instantaneous velocity for the purpose of acquiring information on the environment and/or surrounding objects. A scenario where sensing and communication share the same frequency band and hardware is being considered. In addition, methods of sharing or reusing radio waves intended for communication (e.g., RSs for communication such as an SSB, DMRS, CSI-RS, and/or SRS) for radio waves for sensing or methods of designing separate radio waves for wireless sensing may also be considered.

In general, wireless sensing supported in ISAC involves a process where signals transmitted from the transmitter are reflected off a target object and received by the receiver. Depending on the relationship between the transmitter and receiver, different sensing modes may be defined. Based on whether the transmitter and receiver are matched, a case where the transmitter and receiver are matched may be defined as a mono-static sensing mode, and a case where the transmitter and receiver are not matched may be defined as a bi-static sensing mode.

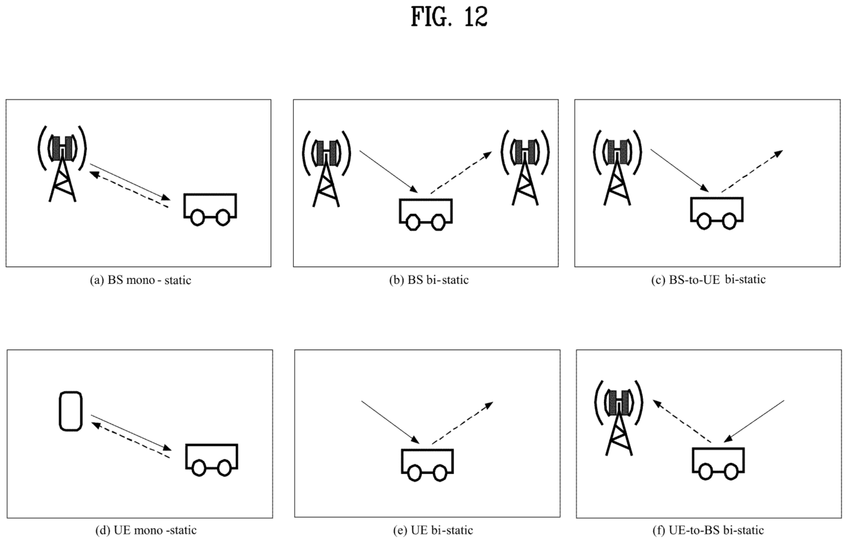

FIG. 12 illustrates examples of wireless sensing modes supported in ISAC.

Referring to FIG. 12, considering the transmission and reception operations in the 3GPP standard and the nodes participating therein, sensing modes may be broadly categorized as follows.

(a) BS mono-static sensing mode: A BS that transmits a radio wave receives a reflected signal.
(b) BS-to-BS bi-static sensing mode: Another BS receives a reflected signal of a radio wave transmitted by a specific BS.
(c) BS-to-UE bi-static sensing mode: A UE receives a reflected signal of a radio wave transmitted by a BS.
(d) UE mono-static sensing mode: A UE that transmits a radio wave receives a reflected signal.
(e) UE-to-UE bi-static sensing mode: Another UE receives a reflected signal of a radio wave transmitted by a specific transmitting UE.
(f) UE-to-BS bi-static sensing mode: A BS receives a reflected signal of a radio wave transmitted by a transmitting UE.

In addition to the six use cases described above, a sensing mode including multiple transmitting/receiving nodes may be referred to a multi-static sensing mode.

The application of wireless sensing through ISAC/JCAS is being considered in various scenarios. Generally, wireless sensing is considered for the purpose of acquiring information on a target with no communication module (or independent of communication modules). For example, considerable scenarios may be broadly divided into three scenarios.

(1) Object detection and tracking: This scenario aims to detect target objects or people and track location information. For example, the following scenarios: intrusion detection in indoor/outdoor environments, tracking the position of an unmanned aerial vehicle (UAV) or automated guided vehicle (AGV), and supporting autonomous driving may be considered.
(2) Environment monitoring: This scenario aims to collect information on the surrounding environment of transmitting/receiving nodes. For example, the following scenarios: rainfall observation and flood detection may be considered.
(3) Motion monitoring: This scenario aims to detect the motion of a target. For example, scenarios for distinguishing human movements or gestures may be considered.

The performance metrics and levels required for each of the above scenarios may vary and differ from one another. To design suitable ISAC/JCAS for the service quality required for each scenario, various key performance requirements need to be considered. In the 3GPP standard, TS 22.137, key performance requirements required for each service scenario are defined as follows: positioning estimation accuracy, velocity estimation accuracy, reliability (confidence level), sensing resolution, missed detection probability, false alarm probability, maximum sensing service delay, and refreshing rate. The required levels for each key performance requirement may vary depending on the service scenario.

Since the radio frequency sensing function does not require connection to objects through devices in the network, it may provide services for object positioning without the need for a device. The capability to obtain range, speed, and angle information from radio frequency signals may enable a wide range of new functions such as object sensing, recognition of objects (e.g., vehicles, humans, animals, UAVs), high-precision positioning, tracking, and activity recognition. Wireless sensing services may provide information for various industries (e.g., unmanned aerial vehicles, smart homes, V2X, factories, railways, public safety, etc.), enabling applications such as intruder sensing, assisted driving and navigation, trajectory tracking, collision avoidance, traffic control, and health and transportation management. In some cases, wireless sensing may employ non-3GPP type sensors (e.g., radar, camera) to additionally support 3GPP-based sensing. For example, the operation of wireless sensing services, namely, the sensing operations, may rely on transmission, reflection, and scattering processing of wireless sensing signals. Therefore, wireless sensing may provide an opportunity to enhance conventional communication systems from communication networks into wireless communication and sensing networks.

## Reduced Capability (RedCap) UE

Recently, in addition to the 5G main use cases (mMTC, eMBB and URLLC), use case areas spanning mMTC and eMBB, or mMTC and URLLC have received increasing importance/interest, and thus a need for a UE for efficiently supporting these use cases in terms of device cost, power consumption, form factor, or the like has increased. In the present disclosure, a UE for this purpose may be defined as a (NR) reduced capability (RedCap) UE/device. Apart from the RedCap device, a general NR UE that support all or one or more of 5G main use cases may be defined as NR (normal) UE/device or non-RedCap UE/device. The Redcap UE may be a UE for intentionally reducing some of 5G key capabilities (highest data rate, user experience data rate, latency, mobility, connection density, energy efficiency, spectrum efficiency, and regional traffic efficiency) defined in IMT-2020 to achieve all or part of low device cost/complexity, low power consumption, small form factor, and the like.

The area of 5G use cases spanning mMTC and eMBB, or mMTC and URLLC, which are target use cases of the Redcap device, is referred to as redcap use cases for convenience in the present disclosure. Redcap use cases may be, for example:

(1) Connected industries

1) A sensor and an actuator may be connected to a 5G network and a core.

- including large-scale industrial wireless sensor networks (IWSN) use cases and requirements
- Very demanding URLLC services as well as relatively low cost services requiring small device form factors with battery life of several years
- The requirements for the corresponding services are higher than low power wide area (LPWA), i.e., LTE-M/NB-IOT, but lower than URLCC and eMBB.
- Devices in these environments include: a pressure sensor, a humidity sensor, a thermometer, a motion sensor, an accelerometer, an actuator, and the like.

2) Smart city

- A vertical field of the smart city includes data collection and processing for more efficiently monitoring and controlling a city resource and providing a service to a city resident. In particular, surveillance camera deployment is an essential part not only in a smart city but also in a factory and an industrial site.

3) Wearable

- A wearable use case may include a smart watch, a ring, an eHealth-related device, and a medical monitoring device. One characteristic of the use case is a small size of a device.

The Redcap use cases may not be supported by low power wireless area (LPWA) UEs (e.g., LTE-M or NB-IoT) in terms of a bit rate, latency, or the like and may be functionally supported by an NR UE, but may be inefficient in terms of the manufacturing cost of a UE, form factor, battery life, and the like. Supporting the above use case areas in the 5G network with the redcap UE with characteristics such as low cost, low power, and small form factor may result in reduction of UE manufacturing and maintenance costs. Redcap use cases may have quite diverse requirements in terms of UE complexity, target bit rate, latency, power consumption, and the like. These redcap requirements may be divided into (generic) requirements that are commonly applied to all redcap use cases and (use case specific) requirements that are applied only to specific use case(s). Some representative generic and use case specific requirements may be defined as shown in Table 3 below.

[Table 3]

| |
|---|
| 1. Generic requirements<br>- Device complexity/cost: Main motivation for the new device type is to lower the device cost and complexity as compared to high-end eMBB and URLLC devices of Rel-15/Rel-16. This is especially the case for industrial sensors.<br>- Device size: Requirement for most use cases is that the standard enables a device design with compact form factor<br>- Deployment scenarios: System should support all FR1/FR2 bands for FDD and TDD<br>2. Use case specific requirements<br>- Industrial wireless sensors<br>-- Reference bit rate: < 2 Mbps (potentially UL heavy traffic)<br>-- End-to-end latency: < 100 ms; ~ 5-10 ms for safety related sensors<br>-- Battery: at least few years<br>-- Communication service availability: 99.99%<br>-- Stationary<br>- Video Surveillance<br>-- Reference bit rate: < 2-4 Mbps for economic video; ~7.5-25 Mbps for high-end video (UL heavy traffic)<br>-- Latency: < 500 ms<br>-- Reliability: 99%-99.9%.<br>- Wearables<br>-- Reference bit rate: 10-50 Mbps in DL and >= 5 Mbps in UL for smart wearable application<br>-- Peak bit rate: 150 Mbps in DL and 50 Mbps in UL<br>-- Battery: multiple days (up to 1-2 weeks) |

The above redcap requirements may be satisfied by (a combination of) various features provided by the UE and the BS, and the following shows examples of the features and sub-features supported by the UE/BS to satisfy the redcap requirements.

-> Complexity reduction features:

- Reduced number of UE RX/TX antennas

- UE bandwidth reduction

- Half-Duplex-FDD

- Relaxed UE processing time

- Relaxed UE processing capability

-> Power saving:

- Reduced PDCCH monitoring by smaller numbers of BDs and CCE limits
- Extended DRX for RRC Inactive and/or Idle
- RRM relaxation for stationary devices

-> Coverage recovery/enhancement

**Frequency hopping (FH) of SRS for positioning**

The 3GPP has been advancing standardization and technology development to support various devices like MTC/NB-IoT terminals, in addition to legacy portable UEs. As one of these technologies, reduced capability (RedCap) NR was introduced in Rel-17. RedCap NR requires cost benefits by lowering the capability of legacy NR, is less sensitive to data rates, and has a lower requirement for latency. RedCap-supporting UEs may include wearable devices, industrial wireless sensors, and video surveillances, and achieve capability benefits by reducing a supported bandwidth and the maximum numbers of supported MIMO layers, modulation orders, and Rx branches, and supporting half-duplex (HD) across all bands.

The target requirements for the positioning accuracy of RedCap UEs in the current 3GPP NR Rel-18 standard are as follows, and a majority of experiments have shown results that do not satisfy the target performance requirements in Table 4 below. Compared to a normal UE, a UE supporting the legacy NR supports a small maximum frequency bandwidth, which may lead to performance degradation in terms of the decoding/detection accuracy of transmitted and received reference signals. Accordingly, UL SRS frequency hopping is under discussion in Rel-18 to improve the positioning accuracy of RedCap UEs. As a result of testing SRS-based positioning accuracy in relation to frequency hopping pattern-related factors such as a UE speed, a time gap between adjacent hops, and the application of overlapping, it was identified that as the UE speed increases, SRS-based positioning accuracy performance decreases, and applying overlapping increases the SRS-based positioning accuracy performance.

[Table 4]

|  | commercial use cases | IIoT use cases |
| --- | --- | --- |
| Horizontal positioning accuracy | (< 3 m) for 90% of UEs | (< 1 m) for 90% of UEs |
| Vertical positioning accuracy | (< 3 m) for 90% of UEs | (< 3 m) for 90% of UEs |

Considering these characteristics and problems, methods such as frequency hopping operations and related signaling are proposed below to support improved accuracy performance of UL SRS-based positioning for a RedCap UE. Further, while the proposed methods are described in the context of UL-based positioning in a 3GPP NR system, those skilled in the art will understand that these methods are not limited to the UL-based positioning and may be generally applied to other positioning techniques for determining a position by estimating the distance or direction between a transmitter and a UE. Therefore, it is obvious that the proposed methods may be applied to all types of transmission/reception methods and positioning techniques expected by a BS and a UE, as long as the principle of the present disclosure is not violated.

While the proposed methods are described below in the context of an SRS as a reference signal in the 3GPP NR system, those skilled in the art will understand that these methods are not limited to the SRS and may be generally applied to other reference signals transmitted and received for communication between a BS and a UE. Therefore, it is obvious that the proposed methods may be applied to all types of transmission/reception methods and reference signals expected by a BS and a UE, as long as the principle of the present disclosure is not violated.

Further, the proposed methods may be applied in combination. Each proposed method may operate independently without a separate combination, or one or more of the proposed methods may be combined to operate in an integrated manner. Some terms, symbols, and sequences used to describe the present disclosure may be replaced with other terms, symbols, or sequences, as long as the principle of the present disclosure is maintained.

**[Method 1] Combination of Existing SRSp Resource Configuration Method and New Frequency Hopping Configuration Method**

To support the improvement of the SRS-based positioning accuracy of RedCap UEs, a method is proposed for dynamically controlling a frequency hopping pattern, when a frequency hopping operation is performed within a virtual bandwidth range for a signal transmitted from a UE to a BS. Further, a frequency hopping method that supports overlapping for phase compensation between hops is proposed.

In a specific scenario (e.g., the NR Rel-17 standard), an RRC configuration for an SRS may be included in active BWP configuration information, and an SRSp resource set and a resource-related configuration may be included in the RRC configuration. In the specific scenario, frequency hopping for SRS resource(s) for multiple input and multiple output (MIMO) is supported/configured by RRC configuration information, but the RRC configuration information for SRSp resource(s)/set does not include parameters related to a frequency hopping configuration. Therefore, an RRC configuration method may be needed to support a frequency hopping operation for resources of an SRS for positioning, SRSp, which are not supported in this scenario. For example, a new RRC parameter or information element (IE) including related configuration information may be defined for the frequency hopping operation for SRSp resources. This newly defined parameter or IE may include information for configuring a frequency hopping operation, a BWP ID, and an SRSp resource ID, which may be used to specify SRSp resources to be applied to a corresponding frequency hopping operation configuration.

A method for configuring an RRC configuration related to frequency hopping will be described below, and the term UE may refer to a RedCap UE in the following description.

1. RRC Configuration Related to Frequency Hopping

(1) Method for Configuring RRC Configuration Information Related to Frequency Hopping

A new parameter or IE for frequency hopping-related configuration information may be defined. Specifically, a method for defining explicit parameters (e.g., the number of hops and a hop bandwidth (BW)) indicating a frequency hopping pattern in association with existing SRSp resource configuration information may be considered. For example, in the aforementioned specific scenario, the frequency-domain location and BW of SRSp resources may be assigned by parameters for a C-SRS value, a frequency-domain shift value, and a transmission comb offset included in the RRC configuration information for the SRSp resources. In this case, the assigned values of the frequency-domain location and BW of the SRSp resources may be considered the starting location and total system BW of the entire hopping operation, and the number of hops and the BW of each hop may be configured by additionally defining the number of hops and the BW of each hop related to the frequency hopping configuration. Alternatively, in this configuration method, the offset of the first hop may be fixed, or a staircase frequency hopping pattern may be configured. In this case, the transmission overhead of RRC parameters in the RRC configuration related to the frequency hopping configuration may be reduced.

(2) Configuration Related to Overlapping Operation

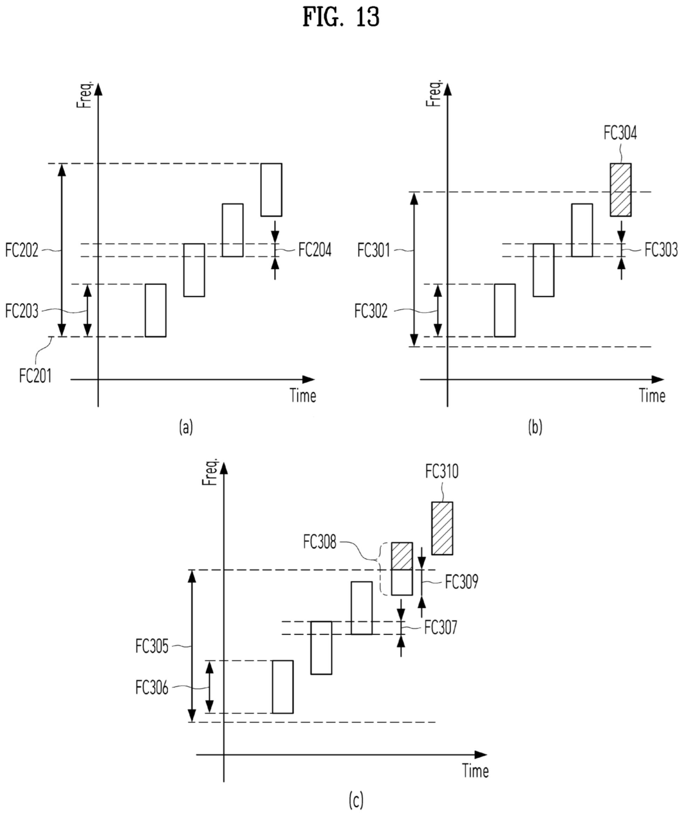

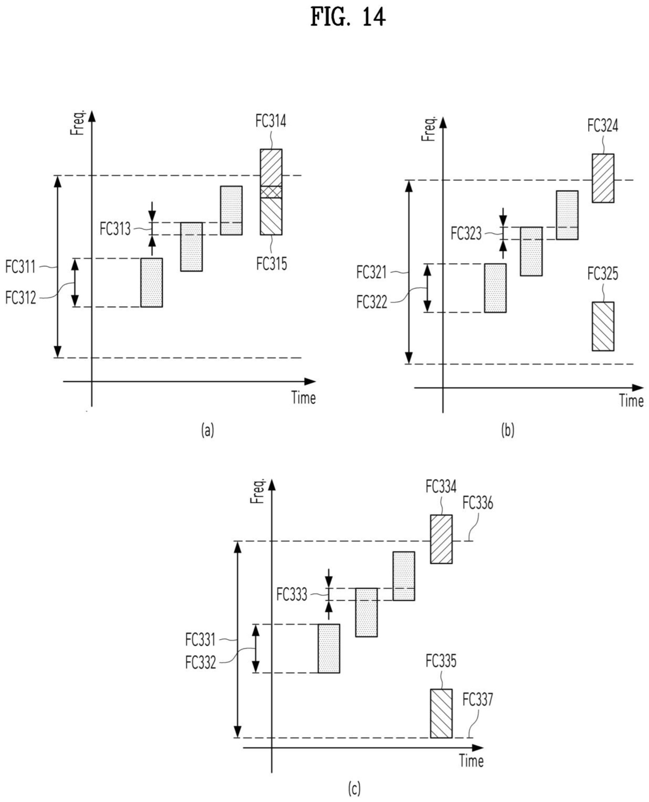

FIGS. 13 and 14 are diagrams illustrating methods for configuring frequency hopping for an SRSp.
For convenience of description, a BW in which an SRSp/SRSp resources may be transmitted through frequency hopping in an SRSpositioning-frequency hopping (SRSp-FH) operation of a UE is defined as an SRSp BW, and the BW of each hop in the SRSp-FH operation of the UE is defined as a hop BW.
When an overlapping technique is supported during frequency hopping to improve the accuracy of UE positioning, the RRC configuration related to frequency hopping may further include configuration information related to the overlapping operation. The configuration related to the overlapping operation may be performed by setting the number of overlapping RBs between hops in the frequency domain, and configuration information related to the overlapping operation may be included as optional information in a new parameter defined in the frequency hopping-related RRC configuration information mentioned above.
Referring to FIG. 13(a), SRSp resources may be frequency-hopped based on an RRC configuration related to frequency hopping. Herein, each block represents an SRSp resource, FC201 represents the starting position of the SRSp-FH in the frequency domain, and FC202 represents an SRSp BW, which is the total BW of the SRSp-FH. FC201 and FC202 may be configured by using existing location and/or BW information configured for SRSp resources. FC203 represents the BW of each hop (hop BW), and FC204 represents an overlapping frequency part between adjacent hops. FC203 (and/or FC201 and FC202) may be configured by a new parameter defined in the above-described frequency hopping-related RRC configuration information, and FC204 may be optionally configured. The frequency hopping operation illustrated in FIG. 13(a) is an example for convenience of description, and the proposed method may be applied to the transmission of SRSp/SRSp resources with frequency hopping without limitation, in addition to the example of FIG. 13(a).

(3) Operation Related to Total BW (or SRSp BW) Configuration

The total BW of the SRSp-FH may be configured by reusing a parameter currently supported for configuring an SRSp resource BW in the specific scenario, directly configured by defining a new parameter, or implicitly configured by a combination of other SRSp-FH configuration-related parameters. Although a value (or RRC parameter value) set by the above methods has been described as being limited to the total BW value by which the SRSp-FH operation is performed, the total BW may also be set based on a maximum and/or minimum value corresponding to the total BW. Alternatively, the total BW may be set in consideration of the constraints of a BW over which SRSp resources are transmittable (e.g., the range of a UL carrier where UL transmission is allowed).
Methods for controlling the transmission of some hop(s) such that it does not exceed the range of a total BW, which is an SRSp BW enabling SRSp-FH transmission, will be described below in detail. The control methods may include dropping at least one hop outside the range of the SRSp BW, reassigning the at least one hop to another frequency location, and/or dropping or reassigning the at least one hop based on the size and location of an SRSp-FH frequency in which the UE is expected to transmit. Each control method will be described in detail in Option 1, Option 2, and Option 3 below.

1) Option 1: Method for Dropping Hop(s) Outside SRSp-FH BW Range

To prevent hops from exceeding the range of an SRSp BW, the UE may drop at least one hop outside the SRSp BW from among a plurality of hops configured/assigned for the SRSp BW, and transmit the remaining hop(s) within the range of the SRSp BW according to an assigned frequency location/size. To drop the at least one hop outside the range of the SRSp BW, a first drop method that drops the hop itself or a second drop method that drops only PRB(s) outside the transmission BW in the hop may be considered. The first and second drop methods will be described separately in Option 1-1 and Option 1-2.

A. Option 1-1

From among the plurality of hops configured/assigned for the SRSp BW, all of the at least one hop outside the SRSp BW may be dropped, and the hops within the SRSp BW may be transmitted according to their respective assigned frequency locations and sizes. This may ensure that even when frequency hopping is applied to the SRSp, the SRSp/SRSp resources are transmitted only within the SRSp BW.

Referring to FIG. 13(b), the UE may perform frequency hopping for SRSp resource(s) and transmit an SRSp/SRSp resource in each block (SRSp resource). As described before, an SRSp BW FC301 is an SRSp BW available for SRSp-FH transmission, and a hop BW FC302 is the hop BW of each hop. The SRSp BW FC301 and the hop BW FC302 may be configured by RRC configuration parameters as described above. Additionally, an overlapping BW FC303 refers to an overlapping frequency part between adjacent hops and may be optionally configured through an RRC configuration.

For example, in Option 1-1, when the UE performs an SRSp-FH transmission indicated/configured by the BS, it may drop all PRBs included in specific hop(s) (e.g., FC304) that are outside the SRSp BW FC301. In this case, the remaining hops, except for the specific hop FC304, may be transmitted at their assigned/configured frequency locations and BWs. The frequency hopping operation shown in FIG. 13(b) is an example for convenience of description, and Option 1-1 may be applied to the transmission of SRSp/SRSp resources with frequency hopping without limitation, in addition to the example of FIG. 13(b).

B. Option 1-2

The UE may drop only some PRB(s) of at least one hop outside the SRSp BW from among the plurality of hops configured for the proposed SRSp-FH transmission. Herein, the PRB(s) may be PRB(s) outside the range (or boundary) of the SRSp BW among the PRBs configured for the at least one hop. Meanwhile, the hops/PRBs assigned/configured within the SRSp BW range of the SRSp-FH among the plurality of hops may be transmitted according to their assigned frequency locations and sizes.

Specifically, referring to FIG. 13(c), an SRSp BW FC305 and a hop BW FC306 may be configured. Each block may be an assigned SRSp resource. The SRSp BW/hop BW/SRSp resources may be configured by parameters in an RRC configuration. Additionally, an overlapping BW FC307 refers to an overlapping frequency part between adjacent hops and may be optionally configured through the RRC configuration.

In a specific example of Option 1-2, the UE may perform an SRSp transmission in a plurality of hops according to SRSp-FH indicated by the BS. Among the plurality of hops, a first hop FC308 and a second hop FC310 may be outside the SRSp BW FC305. In this case, the second hop FC310 may be entirely dropped, except for the first hop FC308 which is across the boundary of the SRSp BW FC305. For the first hop FC308, if the number of RBs located within the SRSp BW FC305 is greater than or equal to a specific number of RBs (e.g., 4 RBs), only the RBs located outside the SRSp BW FC305 may be partially dropped. In contrast, if the number of RBs located within the SRSp BW FC305 is less than the specific number of RBs (e.g., 4 RBs), the entire first hop FC308 may be dropped. The frequency hopping operation shown in FIG. 13(c) is an example for convenience of description, and Option 1-2 may be applied to the transmission of SRSp/SRSp resources with frequency hopping without limitation, in addition to the example of FIG. 13(c).

The methods of Option 1 (Option 1-1 and/or Option 1-2) may be advantageous in terms of reducing UE complexity, multiplexing gain for multiple UEs, and/or minimizing the negative impact of an SRSp-FH operation on other data transmissions/receptions.

2) Option 2: Method for Reassigning Hop(s) Outside SRSp Bandwidth Range in Frequency Domain

In Option 2, hop(s) that are outside the SRSp BW may be reassigned to a different frequency location within the SRSp BW range. Hop(s) within the SRSp BW range may be transmitted at their assigned frequency locations and sizes. Reassignment methods (for reassigning hop(s) outside the SRSp BW range to other frequency locations within the SRSp BW range) may include a first reassignment method that reassigns the hop(s) to the frequency location of another hop that is closest in the time domain, a second reassignment method that reassigns the hop(s) to a frequency location adjacent to the frequency location of another hop that is farthest in the frequency domain, and a third reassignment method that reassigns the hop(s) to a frequency location adjacent to the opposite boundary of the SRSp BW to the boundary that the hop(s) have exceeded. The first, second, and third reassignment methods will be described in detail in Option 2-1, Option 2-2, and Option 2-3, respectively.

A. Option 2-1

The UE may transmit SRSp resources in a plurality of hops based on an SRSp-FH operation. Specifically, referring to FIG. 14(a), FC311 may represent an SRSp BW available for the SRSp-FH transmission, and FC312 may represent a hop BW of each hop. FC311 and FC312 may be configured by RRC parameters related to the SRSp-FH operation, as described above. FC313 refers to an overlapping BW between adjacent hops and may be optionally configured by an RRC parameter related to the SRSp-FH operation.

For example, referring to FIG. 14(a), when the UE transmits SRSp resources to which an SRSp-FH operation indicated/assigned by the BS is applied, it may reassign at least one hop FC314 outside the SRSp BW FC311. The UE may reassign the frequency resources of the at least one hop FC314 based on the frequency location of a hop FC315 that is closest to the at least one hop FC314 in the time domain.

Option 2-1 may reduce UE complexity by RF retuning. It may also reduce a switching gap in some cases, thereby reducing the total transmission time of the SRSp-FH operation. This may reduce a negative impact on data transmission.

B. Option 2-2

The UE may transmit SRSp resources in a plurality of hops based on an SRSp-FH operation. Specifically, referring to FIG. 14(b), FC321 may represent an SRSp BW available for an SRSp-FH transmission, and FC322 may represent a hop BW of each hop. FC321 and FC322 may be configured by RRC parameters related to the SRSp-FH operation, as described above. FC323 refers to an overlapping BW between adjacent hops and may be optionally configured by an RRC parameter related to the SRSp-FH operation.

For example, referring to FIG. 14(b), when the UE transmits SRSp resources to which an SRSp-FH operation indicated/assigned by the BS is applied, it may reassign at least one hop FC324 outside the SRSp BW FC321. The UE may reassign the frequency resources of the at least one hop FC324 based on the frequency location of a hop FC325 that is farthest from the at least one hop FC324 in the frequency domain. Herein, overlapped frequency resources between the at least one hop FC324 and a hop FC322 may correspond to the aforementioned overlapping BW.

Option 2-2 may have the advantage of maintaining positioning accuracy performance without using additional time/frequency resources.

C. Option 2-3

The UE may transmit SRSp resources in a plurality of hops based on an SRSp-FH operation. Specifically, referring to FIG. 14(c), FC331 may represent an SRSp BW available for an SRSp-FH transmission, and FC332 may represent a hop BW of each hop. FC331 and FC332 may be configured by RRC parameters related to the SRSp-FH operation, as described above. FC333 refers to an overlapping BW between adjacent hops and may be optionally configured by an RRC parameter related to the SRSp-FH operation.

For example, referring to FIG. 14(c), when the UE transmits SRSp resources to which an SRSp-FH operation indicated/assigned by the BS is applied, it may reassign at least one hop(s) FC334 outside the SRSp BW FC331. The UE may reassign the frequency resources of the at least one hop FC334 based on the frequency location of an opposite boundary FC337 of the SRSp BW to a boundary FC336 that the at least one hop FC334 exceeds. For example, the at least one hop FC334 may be reassigned to FC335.

Option 2-3 is advantageous in that it allows for measurement over a wider frequency band.

3) Option 3: Method for Determining Whether to Drop or Reassign Hop(s) Outside SRSp BW Range Based on Frequency Size and Location of SRSp-FH

In an SRSp transmission based on SRSp-FH, the UE may drop or reassign, in the frequency domain, hop(s) outside an SRSp BW range, taking into consideration the frequency size and location of the SRSp-FH.

In Option 3, when at least one of a plurality of hops for an SRSp transmission based on SRSp-FH is outside an SRSp BW, the UE may perform an operation based on Option 1 or Option 2 according to whether there are available frequency resources in which the at least one hop may actually be located. For example, when an SRSp transmission based on SRSp-FH is outside both the upper and lower bounds of the SRSp BW, the UE may drop all of at least one hop outside the SRSp BW. Alternatively, when the SRSp transmission based on SRSp-FH is outside the lower bound of the SRSp BW, not the upper bound, the UE may determine whether to drop or reassign the at least one hop based on the difference (hereinafter, a first difference value) between a highest frequency location where the SRSp transmission is performed and the upper bound of the SRSp BW and the difference (hereinafter, a second difference value) between a hop BW and an overlapping BW. For example, when the first difference value is greater than (or equal to) the second difference value, the UE may reassign the at least one hop to a frequency location adjacent to another hop with the highest frequency. Alternatively, when the first difference value is less than (or below) the second difference value, the UE may drop the at least one hop.

Alternatively, the UE may expect that some or all of the plurality of hops in a hopping pattern (a hopping pattern determined by the combination of the hop BW, the number of hops, and the number of overlapping PRBs between adjacent hops) related to the SRSp-FH will not exceed the range of the SRSp BW.

A method for performing an SRSp-FH-related operation based on at least one of the above-described SRSp-FH-related options (Option 1 to Option 3) by a UE will be described below in detail. The SRSp-FH operations described above may only be configured for a RedCap UE.

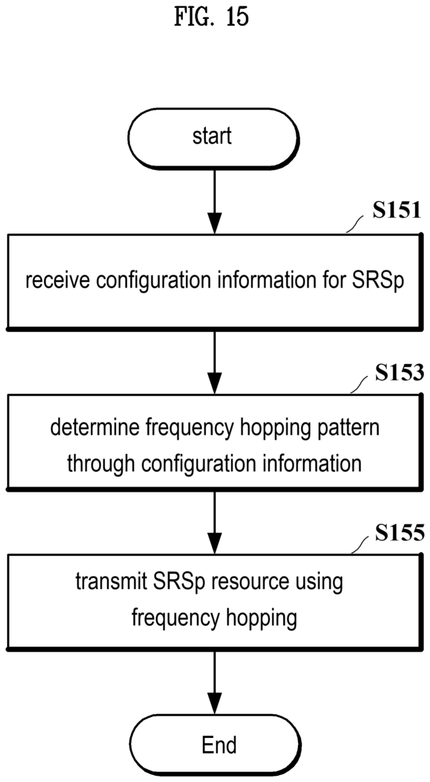

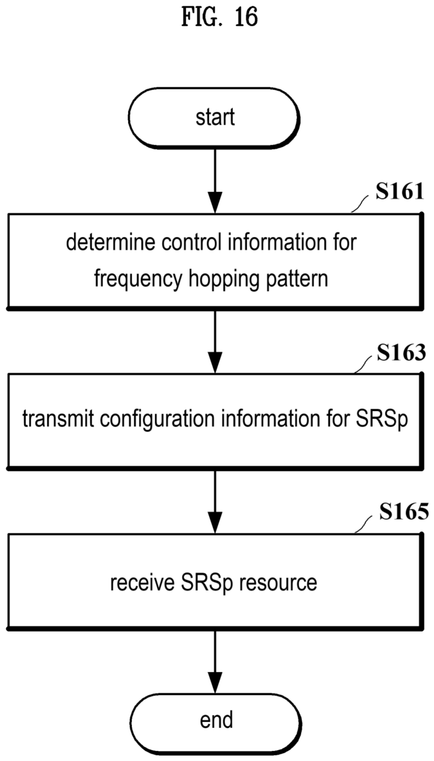

FIGS. 15 and 16 are diagrams illustrating a method for transmitting an SRSp by a UE based on configuration information for the SRSp.

Referring to FIG. 15, the UE may receive configuration information for SRSp resources provided by a BS (S151). When the UE is a RedCap UE, it may additionally receive FH configuration information for frequency hopping related to the SRSp resource(s) from the BS (or the FH configuration information may be additionally included in the configuration information for the SRSp resources). In this case, the UE may expect a transmission operation for the SRSp resources based on the FH configuration information. The UE may determine a frequency hopping pattern using a BWP ID and SRSp resource ID information configured/indicated in the FH configuration information (S153), and perform the transmission operation for the SRSp resources to which the frequency hopping pattern is applied (S155). Specifically, the UE may apply parameter values of the FH configuration information to the SRSp resources according to existing frequency domain resource configuration information for the SRSp resources to calculate a frequency location and BW for the frequency hopping. The UE may transmit the SRSp resources at frequency resource location(s) configured/indicated at an SRSp resource transmission time configured/indicated by the SRSp resource configuration information.

Referring to FIG. 16, a BS may provide a UE with configuration information for SRSp resource(s) indicated by a location management function (LMF). When the UE is a RedCap UE, the BS may determine a frequency hopping pattern to be used/applied for an SRSp transmission through a separate RRC message/signal (S161), and transmit configuration information related to the frequency hopping pattern to the UE (S163). Subsequently, the BS may receive the SRSp resources transmitted from the UE at frequency resource location(s) configured/indicated at a configured/indicated SRSp resource transmission time (S165). The BS may calculate positioning-related measurement(s) by combining SRSp/SRSp resources corresponding to the respective hops, and report the measurement(s) to the LMF.

When the aforementioned Method 1 is used, the LMF may optionally additionally transmit frequency hopping operation-related configuration information through the BS. The LMF may receive a report of the positioning-related measurements for the SRSp resources transmitted from the UE from the BS, and calculate/estimate the location of the UE based on the measurements.

As such, Method 1 has the advantage of saving resources (or RRC signaling resources) by reusing the existing SRSp resource configuration method. Further, the transmission of SRSp resources based on frequency hopping may be initiated in a UL active BWP band by following an SRSp resource configuration included in the UL active BWP. In this case, a switching delay related to frequency hopping may be significantly reduced.

**[Method 2] Method for Dynamically Indicating SRSp Resources and SRSp FH**

In Method 2, to support the improvement of the SRS-based positioning accuracy of RedCap UEs, activation/-deactivation of frequency hopping or a frequency hopping pattern for a transmission signal from a UE to a BS is dynamically indicated.

As described before, a RedCap UE supports a smaller frequency BW than a normal UE (e.g., the RedCap UE supports a BW of 5MHz or 20MHz). In this case, to achieve a gain from a combination of positioning-related signals, the RedCap UE may transmit the positioning-related signals in a virtual BW range wider than a supported BW through frequency hopping. Herein, the virtual BW range may mean a total frequency BW (or the aforementioned SRSp BW) over which all hops are transmitted when a single SRS resource for positioning (hereinafter, an SRSp resource) is transmitted by frequency hopping in the frequency domain, or a frequency BW that includes the transmission of all hops.

The virtual frequency range may be configured in various ways. For example, a UL BWP supported in the current NR standard may be configured/indicated to be wider than a maximum supported frequency BW of the RedCap UE. In this case, the RedCap UE may perform frequency hopping for SRSp resources within the UL BWP to transmit the SRSp resources (or the RedCap UE may perform an RF switching operation for frequency hopping). To do this, a method for configuring the SRSp resource(s)/SRSp resource set may be defined. For example, the frequency hopping operation for the SRSp resource(s)/SRSp resource set may be performed based on the frequency hopping configuration method mentioned above, or it may not be performed. In this case, since characteristics such as a RedCap UE speed, a channel state with the BS, or a target positioning performance may change, dynamic indication of frequency hopping activation/deactivation or dynamic indication of a frequency hopping pattern (for SRSp resource(s)/SRSp resource set) between the BS and the RedCap UE may be required. For example, the BS may dynamically indicate the activation/deactivation of frequency hopping, considering the speed and positioning performance of the RedCap UE, the channel state related to the RedCap UE, and so on.

Herein, the frequency hopping pattern may be a concept that includes elements (or parameters) such as the number of hops, the placement pattern of the hops in the frequency domain, the BW of the hops, an overlap size, and/or a time gap between adjacent hops. Alternatively, the frequency hopping pattern may be defined by a combination of at least one of the above elements. Although the following description will be given in the context of a frequency hopping pattern based on the above-described elements for convenience of description, it may be applied to all kinds of elements related to frequency hopping patterns.

Dynamic indication of frequency hopping-related information via a medium access control (MAC) control element (CE) will be described below in detail.

1. Method for Dynamically Indicating Application of SRSp Resources and SRSp FH by MAC-CE

In a specific 5G scenario, one of the key MAC components, MAC CE contributes to managing connection control and data transmission between a device and a 5G NR network. The MAC CE mainly plays the role of controlling data frames to manage data transmission/reception between a UE and the network, and the role of managing UEs connected to the network and determining the authority for data transmission to a specific UE. These roles of the MAC CE contribute to improving the performance, efficiency, and stability of the 5G NR network. The functions of the MAC CE include SRS transmission/reception, and the MAC CE is used to manage control information required for selecting a required frequency band and modulation scheme in an SRS transmission/reception process.

In dynamic indication of a frequency hopping operation for SRSp resources by the MAC CE, an SRSp resource dynamic indication method may be used, or the dynamic indication of a frequency hopping operation for SRSp resources may be performed separately from the SRSp resource dynamic indication. The former will be described in detail in Option 1, and the latter in Option 2.

(1) Option 1: Using SRSp Resource Dynamic Indication Method

Option 1 may be a method for dynamically controlling a preconfigured frequency hopping-related configuration (hereinafter, frequency hopping configuration) using an SRSp resource set ID field in a legacy MAC CE for semi-persistent (SP) positioning SRS activation/deactivation. As such, methods of using the SRSp resource set ID field may include a first dynamic indication method that defines a virtual ID, and a second dynamic indication method that classifies existing SRSp resource set IDs according to whether they support frequency hopping, for dynamic indication. The first dynamic indication method will be described in Option 1-1, and the second dynamic indication method in Option 1-2.

1) Option 1-1: Method for Mapping SRSp Resource Set(s) and Frequency Hopping Indication by Defining Virtual ID among SRSp Resource Set IDs

In a specific scenario, 4 bits are allocated to the SRSp resource set ID field of the SP positioning SRS activation/deactivation MAC CE to support up to 16 resource set IDs. Virtual ID(s) for dynamically indicating the application of frequency hopping may be assigned/mapped to some of the 4 bits of the SRSp resource set ID field. The virtual ID(s) may be mapped to resource set ID(s) to which the frequency hopping operation will be applied and frequency hopping pattern-related configuration information. In this case, dynamic indication of frequency hopping may be performed together with dynamic indication of activation/deactivation of some SRS resource sets using the legacy MAC CE.

In Option 1-1, activation (or deactivation) of the virtual ID may be indicated to the UE by the SP positioning SRS activation/deactivation MAC CE from the BS. In this case, the UE may activate (or deactivate) the frequency hopping operation for an SRS resource set based on SRS resource set and frequency hopping pattern configuration information mapped to the virtual ID.

2) Option 1-2: Method for Classifying and Configuring SRSp Resource Set IDs as Supporting/Not Supporting Frequency Hopping

In a specific scenario, up to 16 resource set IDs per BWP may be supported. In Option 1-2, some of the maximum 16 resource set IDs may be assigned to SRS resource sets that support frequency hopping, and the remaining IDs may be assigned to SRS resource sets that do not support frequency hopping. In this case, activation/deactivation of an SRS resource set and frequency hopping may be dynamically indicated to the UE by the legacy MAC CE (SRS activation/deactivation MAC CE). Herein, the SRS resource set(s) that support the frequency hopping operation may be mapped to frequency hopping pattern-related configuration information to be applied by an RRC configuration. When an SRS resource set that supports frequency hopping is activated through the MAC CE, the UE may apply frequency hopping to the SRS resource set using frequency hopping pattern-related configuration information configured for that SRS resource set.

In Option 1 (Option 1-1 and/or Option 1-2), the UE may obtain configuration information for SRSp resource set(s) provided by the BS. After the UE obtains the configuration information, the activation/deactivation of the SRSp resource set and activation/deactivation of frequency hopping for the SRSp resource set may be simultaneously indicated to the UE by the BS, based on the SRSp resource set ID field of the MAC CE. When frequency hopping is activated, the UE may determine/configure a frequency hopping pattern for the activated SRSp resource set based on frequency hopping pattern-related configuration information pre-configured/mapped for the activated SRSp resource set ID through RRC signaling. The UE may perform the transmission of the SRSp resources based on the SRSp resource set activated by the MAC CE in a semi-persistent type by applying the frequency hopping pattern corresponding to the SRSp resource set. In this case, the UE may perform the transmission of the SRSp resource set using the activated frequency hopping pattern until a reconfiguration by an RRC message (e.g., reconfiguration of frequency hopping pattern-related configuration information) or a new indication by a MAC CE (e.g., an indication to activate an SRSp resource set ID mapped to different frequency hopping pattern-related configuration information).

Alternatively, in Option 1 (Option 1-1 and/or Option 1-2), the BS may transmit configuration information for an SRSp resource set for frequency hopping indicated by the LMF to the UE. Based on state information and/or dynamic control request information of the UE received from the UE, the BS may configure/indicate activation/deactivation of the SP SRSp resource set and also indicate activation/deactivation of the frequency hopping pattern for the SP SRSp resource set, through the MAC CE. The UE may receive the SRSp resource set based on the frequency hopping pattern dynamically indicated by the MAC CE (if there is an existing frequency hopping pattern, it is changed/adjusted to the frequency hopping pattern dynamically indicated by the MAC CE). The BS may combine hops over which SP SRSp resource sets are received to perform positioning-related measurements and report measurement information to the LMF.

Alternatively, in Option 1 (Option 1-1 and/or Option 1-2), the LMF may transmit the SRSp resource set configuration information to the UE through the BS. The LMF may receive positioning-related measurements measured using the SRSp resource set transmitted from the UE from the BS and use the reported measurements to calculate/estimate the location of the UE.

As such, the proposed method according to Option 1 has the advantage of significantly reducing the signaling load or feedback overhead of a MAC CE, because the legacy MAC CE is still used without defining a separate new MAC CE.

(2) Option 2: Method Performed Separately from SRSp Resource Dynamic Indication Method

In Option 2, dynamic indication of frequency hopping may be performed through a newly defined MAC CE, separate from the legacy SP positioning SRS activation/deactivation MAC CE. For example, an ID field including an SRSp resource set ID and/or SRSp resource ID is defined in the newly defined MAC CE, and the MAC CE may indicate an SRSp resource set and/or SRSp resource to which frequency hopping pattern-related configuration information will be applied. Alternatively, the frequency hopping pattern-related configuration information to be applied to the SRSp resource set and/or SRSp resource may be indicated by another field defined for the newly defined MAC CE. The frequency hopping pattern-related configuration information may include information about the number of hops, a hop BW, the number of overlapping RBs between hops, and so on, and additionally include information related to a time gap between hops depending on the capabilities of the UE.

In Option 2, the UE may receive configuration information for an SRSp resource set and/or SRSp resource from the BS. The UE may receive an indication of activation/deactivation for an SP SRSp through a MAC CE transmitted from the BS, and dynamically receive an indication of activation/deactivation of a frequency hopping operation through the newly defined MAC CE. Based on the MAC CEs, the UE may configure/determine whether to perform frequency hopping for the activated SRSp resource set and/or SRSp resource, and a frequency hopping pattern to be applied, and transmit the SRSp resource set and/or SRSp resource in a semi-persistent type. In this case, the UE may perform the transmission of the SRSp resource set and/or SRSp resource using the activated frequency hopping pattern until a reconfiguration by an RRC message or an indication by the new MAC CE.

Alternatively, in Option 2, the BS may transmit configuration information for an SRSp resource set for frequency hopping indicated by the LMF to the UE. Based on state information about the UE or dynamic control request information received from the UE, the BS may configure dynamic control information for the SP SRSp resource set and transmit dynamic control information for a frequency hopping pattern for the SP SRSp resource set and/or SRSp resource to the UE through the newly defined MAC CE. The BS may perform a reception operation for the SRSp resource set and/or SRSp resource based on the frequency hopping pattern according to the dynamic control information. After the dynamic indication is received, the BS may receive the SRSp resource set and/or SRSp resource based on an adjusted frequency hopping pattern. The BS may combine hops over which the SRSp resource set and/or SRSp resource has been received to perform positioning-related measurements and report the measurements to the LMF.

In Option 2, the LMF may transmit the configuration information for the SRSp resource set to the UE through the BS. The LMF may receive the positioning-related measurements measured using the SRSp resource set transmitted from the UE from the BS and calculate/estimate the location of the UE based on the reported measurements.

In Option 2, the proposed disclosure may dynamically indicate activation/deactivation of a frequency hopping operation for all supported SRSp resource set(s) and/or SRSp resources in the specific scenario, thereby flexibly maximizing the utilization of the SRSp resources.

While Method 2 has been described above in consideration of dynamical control of a semi-persistent (SP) SRSp resource set using a MAC CE, it is obvious that Method 2 may also be applied to dynamic control of periodic SRSp resources and/or aperiodic (AP) SRSp resources/resource sets using a MAC CE, as long as the spirit of the present disclosure is maintained.

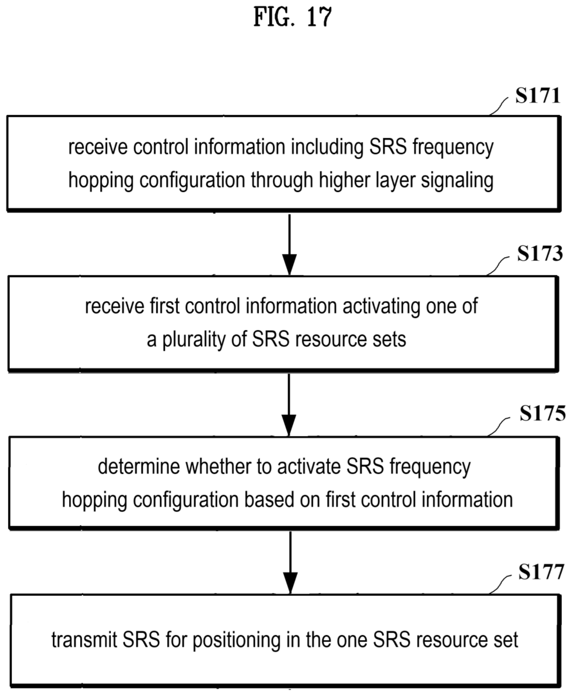

FIG. 17 is a diagram illustrating a method for transmitting an SRS for positioning by a UE.

The method for transmitting an SRS for positioning by a UE will be described below based on FIGS. 13 to 16 described above.

Referring to FIG. 17, the UE may receive configuration information including an SRS frequency hopping configuration from a BS through higher layer signaling (S171). The SRS frequency hopping configuration may include information about the number of hops, the number of symbols in the hops, the BW of the hops, and the number of overlapping resource blocks between hops. Alternatively, the configuration information may include at least one SRS frequency hopping configuration. For example, as will be described later, the configuration information may include a different SRS frequency hopping configuration for each SRS resource set ID. Herein, the UE may be a RedCap UE with a maximum transmission BW size limited to 20MHz (or 5MHz). In this case, the UE may receive/be configured with the SRS frequency hopping configuration related to the SRS transmission to improve the accuracy of SRS-based positioning.

Alternatively, the UE may further receive SRS resource configuration information for a plurality of SRS resource sets for positioning through higher layer signaling. For example, the SRS resource configuration information may include information about a plurality of SRS resource set IDs assigned to the plurality of SRS resource sets and information about frequency/time resources corresponding to the respective IDs. The higher layer signaling may be RRC signaling, as described above.

Subsequently, the UE may receive first control information that activates one SRS resource set among the plurality of SRS resource sets based on an SRS resource set ID (S173). As described above, the first control information may include information about the one resource set ID from among the plurality of SRS resource set IDs assigned to the plurality of SRS resource sets through the SRS resource configuration information. For example, the first control information may be signaled to the UE through a MAC CE for activating an SRS resource set, and the UE may activate the one SRS resource set from among the plurality of SRS resource sets based on an SRS resource set ID included in an ID field of the MAC CE. The first control information and second control information to be described later may be received through a MAC CE.

Subsequently, the UE may determine whether to activate the SRS frequency hopping configuration (S175). Specifically, the UE may determine whether to activate the SRS frequency hopping configuration based on the first control information that activates the one SRS resource set. For example, some of the plurality of SRS resource set IDs may be pre-assigned as IDs that support frequency hopping, and the remaining SRS resource set IDs may be pre-assigned as IDs that do not support frequency hopping. Such information about whether frequency hopping is supported for each SRS resource set ID may be provided as the SRS resource configuration information or through separate RRC signaling. In this case, the UE may activate the SRS frequency hopping configuration, based on the SRS resource set ID of the one SRS resource set included in the first control information being assigned as an ID that supports frequency hopping. Alternatively, based on the SRS resource set ID of the one SRS resource set included in the first control information being assigned as an ID that does not support frequency hopping, an already activated SRS frequency hopping configuration may be deactivated, or the SRS frequency hopping configuration may not be activated.

Alternatively, when the one SRS resource set ID is an ID that supports frequency hopping, the UE may activate the SRS frequency hopping configuration corresponding to the one SRS resource set ID from among at least one SRS frequency hopping configuration included in the configuration information. As described above, the configuration information may include a different SRS frequency hopping configuration (or frequency hopping pattern) for each SRS resource set ID that supports frequency hopping. In this case, the UE may activate the SRS frequency hopping configuration corresponding to the SRS resource set ID included in the first control information from among the at least one SRS frequency hopping configuration. Alternatively, after activating the SRS frequency hopping configuration upon receiving the first control information, when receiving second control information including another SRS resource set ID that does not support frequency hopping, the UE may deactivate the activated SRS frequency hopping configuration. Alternatively, after activating the SRS frequency hopping configuration upon receiving the first control information, when receiving third control information including another SRS resource set ID that supports frequency hopping, the UE may change the activated SRS frequency hopping configuration to an SRS frequency hopping configuration corresponding to the other SRS resource set ID.

Subsequently, the UE may transmit the SRS for positioning in the activated one SRS resource set (S 177). As described above, when the SRS frequency hopping configuration is activated/applied in relation to the one SRS resource set, the UE may frequency-hop the SRS based on the SRS frequency hopping configuration and transmit it in each of a plurality of hops. When at least one hop from among the plurality of hops is outside a transmission BW for the SRS (the aforementioned SRSp BW), the UE may drop or reassign the at least one hop based on at least one of the aforementioned methods for dropping/reassigning at least one hop.

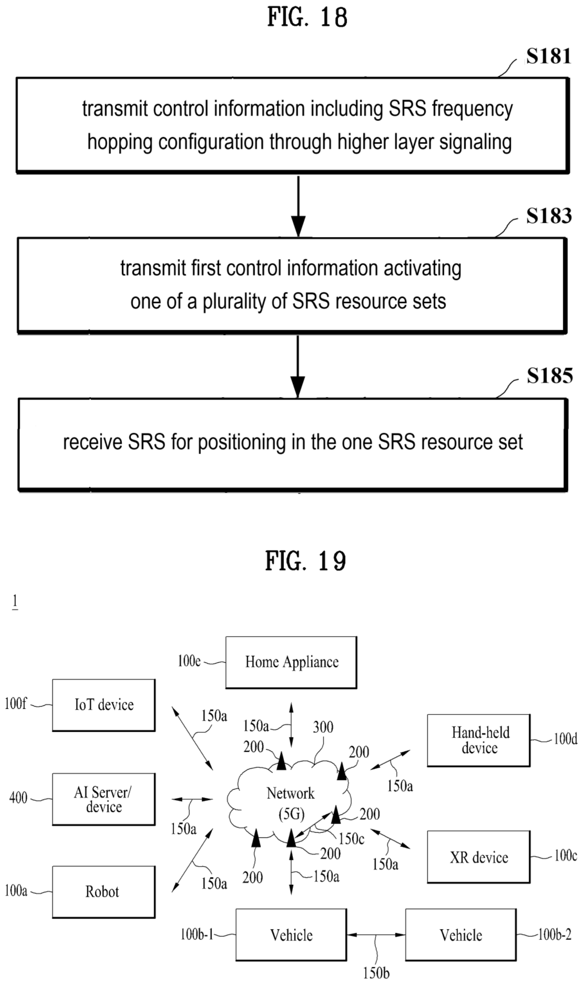

FIG. 18 is a diagram illustrating a method for receiving an SRS for positioning by a BS.

The method for receiving an SRS for positioning by a BS will be described below based on FIGS. 13 to 17 described above.

Referring to FIG. 18, the BS may transmit configuration information including an SRS frequency hopping configuration to a UE through higher layer signaling (S181). The SRS frequency hopping configuration may include information about the number of hops, the number of symbols in the hops, the BW of the hops, and the number of overlapping resource blocks between hops. Alternatively, the configuration information may include at least one SRS frequency hopping configuration. For example, as will be described later, the configuration information may include a different SRS frequency hopping configuration for each SRS resource set ID.

Alternatively, the BS may further transmit SRS resource configuration information for a plurality of SRS resource sets for positioning to the UE through higher layer signaling. For example, the SRS resource configuration information may include information about a plurality of SRS resource set IDs assigned to the plurality of SRS resource sets and information about frequency/time resources corresponding to the respective IDs. The higher layer signaling may be RRC signaling, as described above.

Subsequently, the BS may transmit first control information that activates one SRS resource set among the plurality of SRS resource sets to the UE based on an SRS resource set ID (S183). As described above, the first control information may include information about the one resource set ID from among the plurality of SRS resource set IDs assigned to the plurality of SRS resource sets through the SRS resource configuration information. For example, the first control information may be signaled to the UE through a MAC CE for activating an SRS resource set, and the BS may activate the one SRS resource set from among the plurality of SRS resource sets based on the SRS resource set ID included in an ID field of the MAC CE. The first control information may be received through the MAC CE.

Subsequently, the BS may receive the SRS for positioning from the UE in the activated one SRS resource set (S185). As described above, the BS may determine whether the SRS frequency hopping configuration is applied to the transmission of the SRS based on whether the SRS resource set ID of the one SRS resource set included in the first control information supports frequency hopping. For example, when the SRS resource set ID of the one SRS resource set included in the first control information is an ID that supports frequency hopping, the BS may expect to receive the SRS to which the SRS frequency hopping configuration is applied. In this case, the BS may combine SRSs received in a plurality of hops to calculate positioning-related measurements and report the calculated measurements to the LMF, or may calculate/estimate the location of the UE based on the calculated measurements.

As such, the proposed disclosure may dynamically indicate whether frequency hopping is supported by using the legacy MAC CE that dynamically indicates activation of an SRS resource set through an SRS resource set ID, without defining a new MAC CE for indicating activation of an SRSp frequency hopping configuration. This may minimize the increase in the signaling load of the MAC CE for dynamically indicating whether the SRSp frequency hopping configuration is activated.

Further, the proposed disclosure may easily deactivate an SRS frequency hopping configuration or change an activated SRS frequency hopping configuration simply by changing an SRS resource set ID included in the MAC CE that activates an SRS resource set.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 19 illustrates a communication system applied to the present disclosure.

Referring to FIG. 19, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

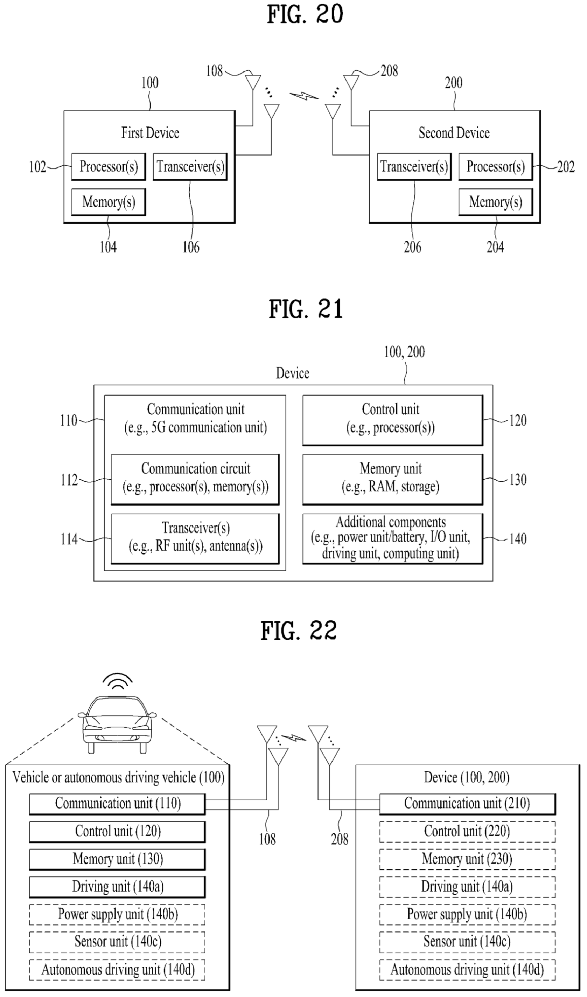

FIG. 20 illustrates a wireless device applicable to the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or network 100 may include the processor 102 connected to the transceiver 106, and the memory 104. The memory 104 may include at least one program that may perform operations related to the embodiments described with reference to FIGS. 13 to 18.

The processor 102 may control the transceiver 106 to receive configuration information including an SRS frequency hopping configuration through higher layer signaling, receive first control information activating one of a plurality of SRS resource sets, and transmit the SRS for positioning in the one SRS resource set. It may be determined whether to activate the SRS frequency hopping configuration based on the first control information activating the one SRS resource set.

Alternatively, a processing device including the processor 102 and the memory 104, for controlling a UE that transmits an SRS for positioning may be configured. In this case, the processing device may include at least one processor, and at least one memory connected to the at least one processor and storing instructions which, when executed by the at least one processor, cause the UE to receive configuration information including an SRS frequency hopping configuration through higher layer signaling, receive first control information activating one of a plurality of SRS resource sets, and transmit the SRS for positioning in the one SRS resource set. It may be determined whether to activate the SRS frequency hopping configuration based on the first control information activating the one SRS resource set.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or UE 200 may include the processor 202 connected to a transceiver or the transceiver 206, and the memory 204. The memory 204 may include at least one program that may perform operations related to the embodiments described with reference to FIGS. 13 to 18.

The processor 202 may control the RF transceiver 206 to transmit configuration information including an SRS frequency hopping configuration to a UE through higher layer signaling, transmit first control information activating one of a plurality of SRS resource sets to the UE, and receive the SRS for positioning in the one SRS resource set. It may be determined whether to activate the SRS frequency hopping configuration based on the first control information activating the one SRS resource set.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

FIG. 21 illustrates another example of a wireless device applied to the present disclosure. The wireless device may be implemented in various forms according to a use-case/service (refer to FIG. 19).

Referring to FIG. 21, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Examples of vehicles or autonomous vehicles to which the present disclosure is applied**

FIG. 22 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 22, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are combinations of the components and features of the present disclosure in a predetermined form. Unless explicitly stated otherwise, each component or feature should be considered optional. Each component or feature may be implemented in a form not combined with other components or features. It is also possible to combine some components and/or features to constitute an embodiment of the present disclosure. The order of operations described in the embodiments of the present disclosure may be changed. Some configurations or features of one embodiment may be included in another embodiment, or may be replaced with corresponding configurations or features of another embodiment. It is apparent that claims not explicitly in a cited relationship in the claims may be combined to constitute an embodiment, or may be included as new claims through amendments after filing.

In this document, the embodiments of the present disclosure have been mainly described focusing on the signal transmission and reception relationship between the UE and the BS. The transmission and reception relationship may be identically or similarly extended to the signal transmission and reception between the UE and the relay, or between the BS and the relay. Specific operations described herein as being performed by the BS may, in some cases, be performed by the upper node. That is, in a network composed of a plurality of network nodes including the BS, various operations performed for communication with the UE may be performed by the BS or by other network nodes different from the BS. The term "base station" may be replaced with terms such as fixed station, Node B, eNode B (eNB), or access point. Similarly, the term "terminal" may be replaced with terms such as user equipment (UE), mobile station (MS), or mobile subscriber station (MSS).

The embodiments of the present disclosure may be implemented by various means, for example, hardware, firmware, software, or a combination thereof. In the case of implementation by hardware, the embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, or microprocessors.

In the case of implementation by firmware or software, the embodiments of the present disclosure may be implemented in the form of modules, procedures, functions, or the like for performing the functions or operations described above. The software code may be stored in a memory unit and driven by a processor. The memory unit may be located inside or outside the processor, and may exchange data with the processor by various means already known.

It will be apparent to those skilled in the art that the present disclosure may be embodied in other specific forms without departing from the features of the present disclosure. Therefore, the above detailed description should not be construed as restrictive in all aspects but should be considered illustrative. The scope of the present disclosure should be determined by a reasonable interpretation of the appended claims, and all modifications within the equivalent scope of the present disclosure are included in the scope of the present disclosure.

## INDUSTRIAL APPLICABILITY

The present disclosure may be used for a UE, a BS, or other equipment in a wireless mobile communication system.

## Claims

1. A method for transmitting a sounding reference signal (SRS) for positioning by a user equipment (UE) in a wireless communication system, the method comprising:

   receiving configuration information including an SRS frequency hopping configuration through higher layer signaling;
   receiving first control information activating one of a plurality of SRS resource sets; and
   transmitting the SRS for positioning in the one SRS resource set,
   wherein the SRS frequency hopping configuration is determined whether to be activated based on the first control information activating the one SRS resource set.

2. The method of claim 1, wherein based on an SRS resource set identifier (ID) of the one SRS resource set included in the first control information being an ID that supports SRS frequency hopping, the SRS frequency hopping configuration is activated.

3. The method of claim 2, wherein the SRS for positioning is transmitted based on the SRS frequency hopping configuration corresponding to the SRS resource set ID.

4. The method of claim 1, wherein based on an SRS resource set ID of the one SRS resource set included in the first control information being an ID that does not support SRS frequency hopping, the SRS frequency hopping configuration is not activated.

5. The method of claim 1, further comprising receiving second control information activating another SRS resource set ID that does not support SRS frequency hopping,
wherein based on the reception of the second control information, the SRS frequency hopping configuration is changed from an activated state to a deactivated state.

6. The method of claim 1, wherein the configuration information includes a different SRS frequency hopping configuration for each SRS resource set ID that supports frequency hopping.

7. The method of claim 1, wherein the SRS frequency hopping configuration includes information about the number of hops, the number of symbols in the hops, a bandwidth of the hops, and the number of overlapping resource blocks between hops.

8. The method of claim 1, wherein the first control information is received through a medium access control (MAC) control element (CE).

9. The method of claim 1, wherein the UE is a reduced capability (RedCap) UE with a maximum transmission bandwidth size limited to 20MHz.

10. A computer-readable recording medium having a program recorded thereon for performing the method of claim 1.

11. A user equipment (UE) for transmitting a sounding reference signal (SRS) for positioning in a wireless communication system, the UE comprising:

   a radio frequency (RF) transceiver; and
   a processor connected to the RF transceiver,
   wherein the processor controls the RF transceiver to receive configuration information including an SRS frequency hopping configuration through higher layer signaling, receive first control information activating one of a plurality of SRS resource sets, and transmit the SRS for positioning in the one SRS resource set, and
   wherein the SRS frequency hopping configuration is determined whether to be activated based on the first control information activating the one SRS resource set.

12. The UE of claim 11, wherein based on an SRS resource set identifier (ID) of the one SRS resource set included in the first control information being an ID that supports SRS frequency hopping, the SRS frequency hopping configuration is activated.

13. A processing device for controlling a user equipment (UE) that transmits a sounding reference signal (SRS) for positioning in a wireless communication system, the processing device comprising:

   at least one processor; and
   at least one memory connected to the at least one processor and storing instructions which, when executed by the at least one processor, cause the UE to receive configuration information including an SRS frequency hopping configuration through higher layer signaling, receive first control information activating one of a plurality of SRS resource sets, and transmit the SRS for positioning in the one SRS resource set,
   wherein the SRS frequency hopping configuration is determined whether to be activated based on the first control information activating the one SRS resource set.

14. A method for receiving a sounding reference signal (SRS) for positioning by a base station (BS) in a wireless communication system, the method comprising:

   transmitting configuration information including an SRS frequency hopping configuration to a user equipment (UE) through higher layer signaling;
   transmitting first control information activating one of a plurality of SRS resource sets to the UE; and
   receiving the SRS for positioning in the one SRS resource set,
   wherein the SRS frequency hopping configuration is determined whether to be activated based on the first control information activating the one SRS resource set.

15. A base station (BS) for receiving a sounding reference signal (SRS) for positioning in a wireless communication system, the BS comprising:

a radio frequency (RF) transceiver; and
a processor connected to the RF transceiver,
wherein the processor controls the RF transceiver to transmit configuration information including an SRS frequency hopping configuration to a user equipment (UE) through higher layer signaling, transmit first control information activating one of a plurality of SRS resource sets to the UE, and receive the SRS for positioning in the one SRS resource set, and
wherein the SRS frequency hopping configuration is determined whether to be activated based on the first control information activating the one SRS resource set.

# FIG. 1

EP 4 694 012 A1

EP 4 694 012 A1

# FIG. 2

# FIG. 3

# FIG. 4

# FIG. 5

DL assingment-to-PDSCH offset (K0)

PDCCH

PDSCH

PUCCH

Slot

PDSCH-to-HARQ-ACK reporting offset (K1)

# FIG. 6

UL grant-to-PUSCH offset (K2)

PDCCH

PUSCH

# FIG. 7

Reference Source

GNSS signals (B)

Target Device

UE/SET

LPP

Measurements(A,B or A+B) or Location

Assistance Data

Location server

E-SMLC/SLP/LMF

radio signals (A)

Reference Source

ACCESS NODE / BS / TS / NG-RAN

- E-CID Location Information Transfer
- OTDOA Information Transfer
- Reporting of General Error Situations

NRPPa

# FIG. 8

BS$_1$

BS$_2$

$\tau_1$ $\tau_2$

$\tau_3$-$\tau_1$

Measurement uncertainty

$\tau_3$

$\tau_2$-$\tau_1$

BS$_3$

# FIG. 9

(a)

(b)

FIG. 10

FIG. 11

FIG. 12

(a) BS mono - static

(b) BS bi-static

(c) BS-to-UE bi-static

(d) UE mono -static

(e) UE bi-static

(f) UE-to-BS bi-static

# FIG. 13

(a)

(b)

(c)

FIG. 14

(a)

(b)

(c)

# FIG. 15

start

S151

receive configuration information for SRSp

S153

determine frequency hopping pattern through configuration information

S155

transmit SRSp resource using frequency hopping

End

## FIG. 16

```
            ┌─────────────┐
            │    start    │
            └─────────────┘
                   │
                   ▼
        ┌───────────────────────────┐  S161
        │ determine control information for │
        │  frequency hopping pattern │
        └───────────────────────────┘
                   │
                   ▼
        ┌───────────────────────────┐  S163
        │ transmit configuration information for SRSp │
        └───────────────────────────┘
                   │
                   ▼
        ┌───────────────────────────┐  S165
        │    receive SRSp resource   │
        └───────────────────────────┘
                   │
                   ▼
            ┌─────────────┐
            │     end     │
            └─────────────┘
```

# FIG. 17

S171

receive control information including SRS frequency
hopping configuration through higher layer signaling

S173

receive first control information activating one of
a plurality of SRS resource sets

S175

determine whether to activate SRS frequency
hopping configuration based on first control information

S177

transmit SRS for positioning in the one SRS resource set

# FIG. 18

transmit control information including SRS frequency hopping configuration through higher layer signaling ⟋ S181

transmit first control information activating one of a plurality of SRS resource sets ⟋ S183

receive SRS for positioning in the one SRS resource set ⟋ S185

# FIG. 19

EP 4 694 012 A1

# FIG. 20

# FIG. 21

# FIG. 22

47

## INTERNATIONAL SEARCH REPORT

| | International application No. |
|---|---|
| | **PCT/KR2024/004664** |

| A. | CLASSIFICATION OF SUBJECT MATTER |
|---|---|

**H04L 5/00**(2006.01)i; **H04W 72/0457**(2023.01)i; **H04W 72/11**(2023.01)i; **H04W 24/10**(2009.01)i; **H04W 64/00**(2009.01)i

According to International Patent Classification (IPC) or to both national classification and IPC

| B. | FIELDS SEARCHED |
|---|---|

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포지셔닝(positioning), SRS(Sounding Reference Signal), 주파수 호핑(frequency hopping), 자원 집합(resource set), 활성화(activation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | INTEL CORPORATION. Positioning for RedCap UEs. R1-2300958, 3GPP TSG RAN WG1 Meeting #112. Athens, Greece. 18 February 2023.<br>See sections 3-4; and figure 2. | 1-15 |
| Y | LG ELECTRONICS. Discussion on positioning support for RedCap UEs. R1-2301069, 3GPP TSG RAN WG1 Meeting #112. Athens, Greece. 17 February 2023.<br>See sections 2.A-2.B. | 1-15 |
| A | ZTE. Discussion on Positioning for RedCap UEs. R1-2300808, 3GPP TSG RAN WG1 Meeting #112. Athens, Greece. 17 February 2023.<br>See sections 2-2.6. | 1-15 |
| A | CMCC. Discussion on RedCap UE positioning. R1-2301012, 3GPP TSG RAN WG1 Meeting #112. Athens, Greece. 17 February 2023.<br>See section 2. | 1-15 |
| A | WO 2018-203653 A1 (LG ELECTRONICS INC.) 08 November 2018 (2018-11-08)<br>See claims 1-15; and figure 15. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 July 2024** | **25 July 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004664**

| Patent document cited in search report | | | Publication date (day/month/year) | Patent family member(s) | | | Publication date (day/month/year) |
|---|---|---|---|---|---|---|---|
| WO | 2018-203653 | A1 | 08 November 2018 | CN | 109923828 | A | 21 June 2019 |
| | | | | CN | 109923828 | B | 01 February 2022 |
| | | | | EP | 3471327 | A1 | 17 April 2019 |
| | | | | EP | 3471327 | B1 | 11 August 2021 |
| | | | | EP | 3910865 | A1 | 17 November 2021 |
| | | | | EP | 3910865 | B1 | 13 March 2024 |
| | | | | JP | 2020-502932 | A | 23 January 2020 |
| | | | | JP | 6810269 | B2 | 06 January 2021 |
| | | | | KR | 10-2019-0039070 | A | 10 April 2019 |
| | | | | KR | 10-2020-0032275 | A | 25 March 2020 |
| | | | | KR | 10-2257816 | B1 | 28 May 2021 |
| | | | | KR | 10-2270085 | B1 | 28 June 2021 |
| | | | | US | 10841059 | B2 | 17 November 2020 |
| | | | | US | 10979186 | B2 | 13 April 2021 |
| | | | | US | 11632279 | B2 | 18 April 2023 |
| | | | | US | 2019-0190669 | A1 | 20 June 2019 |
| | | | | US | 2019-0199497 | A1 | 27 June 2019 |
| | | | | US | 2021-0211254 | A1 | 08 July 2021 |

Form PCT/ISA/210 (patent family annex) (July 2022)